# EUROPÄISCHE PATENTSCHRIFT

(11) **EP 1 088 580 B1**
(45) Veröffentlichungstag und Bekanntmachung des Hinweises auf die Patenterteilung: **17.12.2003**
(21) Anmeldenummer: 99119606.4
(22) Anmeldetag: 02.10.1999
(51) Int. Cl.: B01D 25/21, B01D 25/28, B01D 35/18

(54) **Verfahren zur Trocknung von in Filterkammern einer Filterpresse aufgebauten Filterkuchen sowie Filterpresse zur Durchführung des Verfahrens**
Process of drying filtercakes in filter chambers of a filter press and filter press for carrying out said process
Procédé pour le séchage de gâteaux de filtration dans des chambres de filtration de filtre-presse et filtre-presse pour la mise en oeuvre de ce procédé

(43) Veröffentlichungstag der Anmeldung: 04.04.2001
(73) Patentinhaber: Lenser Filtration GmbH & Co., 89250 Senden (DE)
(72) Erfinder: Buhl, Rolf F., 50739 Köln (DE); Weiler, Manfred, 89250 Senden (DE); Zhu, Qian Dr., Shanghai (CN); Zick, Mathias, 89250 Senden (DE); Heckl, Franz, 89250 Senden (DE)
(74) Vertreter: Dziewior, Joachim, Dipl.-Phys. Dr.

(56) Entgegenhaltungen:
- DE-A- 4 136 906
- DE-A- 4 224 648
- GB-A- 2 258 621
- RUF J ET AL: "DAMPFDRUCKENTWAESSERUNG IN EIENER HEISSEN FILTERPRESSE. VAPOUR PRESSURE DEWATERING IN A HOT FILTER PRESS" AUFBEREITUNGS TECHNIK,DE,VERLAG FUER AUFBEREITUNG SCHIRMER UND ZEH. WIESBADEN, Bd. 38, Nr. 8, 1. August 1997 (1997-08-01), Seiten 411-416, XP000697437 ISSN: 1443-9302

## Beschreibung

Die Erfindung betrifft ein Verfahren zur Trocknung der in den Filterkammern einer aus Membran-Filterelementen und Heizelementen bestehenden Filterpresse im Verlauf eines Filtrationsprozesses aufgebauten Filterkuchen, die zunächst im Anschluß an den Filtrationsprozeß oder einen nachgeschalteten Waschprozeß zur Verringerung der Filterkuchenflüssigkeit einer mechanischen Nachpreßphase mittels einer Membran unterworfen werden, wobei der Filterkuchen zur Trocknung erhitzt und zusätzlich die Filterkammer evakuiert wird. Ferner betrifft die Erfindung eine Filterpresse zur Durchführung des Verfahrens.

Aus der EP 0 676 225 und der GB 2 258 621 sind Filterplatten für Kammerfilterpressenbekannt, die die Durchführung eines solchen Verfahrens erlauben. Die Praxis zeigt jedoch, daß die bei vorgegebenem Energie- und Zeitaufwand ereichbare Restfeuchte des Filterkuchens noch verhältnismäßig hoch ist. Dadurch wird häufig eine getrennte Trocknungsanlage erforderlich, um den notwendigen Trockenstoffgehalt des Filterkuchens zu erreichen.

Der Erfindung liegt die Aufgabe zugrunde, das Verfahren der eingangs genannten Art sowie eine Filterpresse zur Durchführung dieses Verfahrens dahingehend zu verbessern, daß ein deutlich höherer Trocknungsgrad des Filterkuchens erreicht wird, ohne daß ein entsprechender Mehraufwand hinsichtlich höherer Energie- oder Herstellungskosten notwendig ist. Teuere hochtemperaturbeständige Werkstoffe können entfallen.

Diese Aufgabe wird in verfahrenmäßiger Hinsicht dadurch gelöst, daß die Filterkuchen ausschließlich von der der Membran abgewandten Seite her erhitzt werden, wobei die Temperatur unter Berücksichtigung des unter Einfluß des Vakuums erniedrigten Siedepunktes der Filterkuchenflüssigkeit so hoch eingestellt wird, daß eine Dampfschicht gebildet wird, die den Filterkuchen durchdringt und die Restfüssigkeit des Filterkuchens zur Drainagefläche der unbeheizten Membran drückt, und wobei die Beheizung über die Fläche des Filterkuchens so gleichmäßig erfolgt, daß die Übergangszone der dampfförmigen zur flüssigen Phase eben und homogen durch den Filterkuchen verläuft, ohne daß lokale Dampfdurchbrüche auftreten.

Der durch die Erfindung erreichte Vorteil besteht im wesentlichen darin, daß die im Filterkuchen vorhandene Restfeuchte in quantitativ hohem Grad von der dampfförmigen Phase ausgetrieben wird, wobei durch die gleichzeitige Anwendung von Vakuum einerseits das Entfernen der Feuchtigkeit unterstützt und andererseits die Siedetemperatur soweit herabgesetzt wird, daß jedenfalls im Bereich der Membran-Filterelemente keine teuren, hochtemperaturstabilen Werkstoffe eingesetzt werden müssen. Üblicherweise wird die Restfeuchte dabei aus Wasser bestehen, wobei das Verfahren jedoch gleichermaßer auch bei Lösungsmitteln, Ölen oder anderen Flüssigkeiten anwendbar ist.

In bevorzugter Verfahrensweise wird das Vakuum bereits in der Nachpreßphase zur schnelleren Drainage angelegt, wodurch der Trocknungsvorgang weiter beschleunigt werden kann. Als vorteilhaft kann es sich im Rahmen der Erfindung auch erweisen, wenn das Vakuum nicht konstant, sondern intermittierend nach im Einzelfall zu wählendem Zeitmuster angelegt wird. In obigem Sinne kann es weiter hilfreich sein, wenn die Aufheizung des Filterkuchens ebenfalls bereits in der Nachpreßphase begonnen wird.

Um einen besonders guten Wärmeübergang und damit eine optimale Aufheizung zu erreichen, empfielt es sich, daß der Filterkuchen unmittelbar der Oberfläche eines Heizelements anliegt.

Weiter hat es sich im Rahmen der Erfindung als notwendig herausgestellt, daß der Filterkuchen während der Trocknung unter dem Nachpreßdruck der Membran bleibt, wobei der Nachpreßdruck größer eingestellt ist als der Dampfdruck der Filterkuchenflüssigkeit. Dadurch wird der Filterkuchen in der Filterkammer stabilisiert bzw. der Volumenschwund durch den Flüssigkeitsentzug ausgeglichen, so daß ein Zusammenfallen des Filterkuchens oder eine Rißbildung und somit ein den Wirkungsgrad wesentlich vermindernder Dampfdurchschlag vermieden wird.

Zur weiteren Optimierung des Verfahrens sieht die Erfindung die Möglichkeit vor, daß das Membran-Druckmedium zur Einstellung erhöhter Temperaturdifferenzen oder zur Anpassung an verfahrenstechnische Erfordernisse in beschränktem Umfang kühlbar oder heizbar ist.

Üblicherweise wird das Vakuum am Filtratablauf oder am Trübezulauf angelegt. Eine weitere Leistungssteigerung bei der Entwässerung kann dadurch erreicht werden, daß das Vakuum am Filtratablauf und am Trübezulauf angelegt wird.

In vorrichtungmäßiger Hinsicht wird die Erfindung bei einer Filterpresse, die aus mehreren mit einer Stützwand versehenen Membran-Filterelementen besteht, die randseitig fließmitteldicht zusammengespannt sind und dazu einen an die Stützwand anschließenden Plattenrahmen aufweisen, wobei die Membran-Filterelemente zwischen sich Filterkammern mit darin mündenden Einläufen für die zu filtrierende Suspension bilden und ein- oder beidseitig eine mit der Stützwand oder dem Plattenrahmen randseitig dicht verbundene, im übrigen durch ein Druckmedium in die Filterkammer vorbewegbare Membran tragen, die auf ihrer der jeweiligen Filterkammer zugekehrten Wandfläche mit einem Filtertuch belegte Profilvorsprünge aufweist, welche unter dem Filtertuch ein an einen Filtratablauf angeschlossenes Rinnensystem für das Filtrat bilden, dadurch gelöst, daß zwischen jeweils zwei Membran-Filterelementen ein unmittelbar anschließendes Heizelement angeordnet ist, und daß über den gesamten Umfang der Filterfläche gleichmäßig verteilt Filtratablaufbohrungen vorgesehen sind.

Um hinreichend große Ablaufquerschnitte insbesondere auch im Hinblick auf die Anwendung von Vakuum zu gewährleisten, ist es zweckmäßig, daß die im Eckbereich der Membran-Filterelemente angeordneten Filtratablaufkanäle eine flächenoptimierte Gestalt, vorzugsweise Dreiecksgestalt, aufweisen.

Weiter ist es mit Blick auf einen hohen Wirkungsgrad von Vorteil, wenn der Plattenrahmen mit einer vakuumdichten Randabdichtung versehen ist, wobei innerhalb der Randabdichtung eine integrierte Filtertuchklemmung vorgesehen ist.

Um günstige Wärmeübertragungseigenschaften zum Filterkuchen hin zu erreichen, sieht die Erfindung vor, daß die Heizelemente aus einem Werkstoff hoher Wärmeleitfähigkeit und/oder hoher chemischer Resistenz bestehen.

Die Gestaltung der Heizelemente kann den jeweiligen Anforderungen entsprechend vorgenommen werden. Allgemein empfielt es sich hierbei, daß die Heizelemente auf ihrer den Membran-Filterelementen zugewandten Seite der verfahrenstechnischen Anwendung entsprechend eben oder mit einer Kuchenkammer ausgebildet sind, wobei die Oberfläche vorzugweise ohne Drainageflächen gestaltet ist. Grundsätzlich besteht jedoch auch die Möglichkeit, die mit dem Filterkuchen in Kontakt kommende Fläche der Heizelemente mit einer Oberflächenprofilierung derart zu versehen, daß die Kontaktfläche für eine größere Wärmeübertragung vergrößert wird, ohne daß die ein Lösen des Filterkuchens erschwerenden Adhäsionskräfte - jedenfalls merklich - größer würden.

Um im Anschluß an die Trocknung das Lösen des Filterkuchens von dem Heizelement zu erleichtern, ist die Oberfläche der Heizelemente zweckmäßigerweise wenigstens im Bereich der Filterkuchenflächen mit einer antiadhäsiven Beschichtung, vorzugweise mit PTFE versehen. Unter Umständen kann es jedoch bereits ausreichend sein, der Oberfläche eine Hochglanzpolitur zu verleihen.

Je nach individueller Gestaltung und spezifischem Aufbau können die Heizelemente ein- oder mehrteilig ausgebildet sein. Dabei ist es günstig, wenn die Heizelemente bei mehrteiliger Ausbildung geklebt, verschweißt oder unter zusätzlicher Verwendung von Dichtungen verschraubt sind.

Weiter besteht im Rahmen der Erfindung die Möglichkeit, daß die Heizelemente mit runden und/oder ovalen und/oder rechteckigen Heizkanälen versehen sind, wobei weitere Querschnittsgestaltungen grundsätzlich denkbar sind. Die Herstellung der Heizelemente kann durch spangebende Bearbeitung oder durch Gießen erfolgen. Die Heizelemente können statt dessen auch mit elektrischen Heizleitern ausgestattet sein, wobei dann auch die Möglichkeit besteht, entsprechende Heizbleche, ggf. auch in Form von Metallgeweben, einzusetzen.

Als günstig im Hinblick auf eine homogene Wärmeabgabe hat es sich erwiesen, wenn die Heizkanäle mäanderförmig angeordnet sind.

Schließlich besteht noch die Möglichkeit, daß die Heizelemente im Randbereich des Rahmens wärmeisolierend ausgebildet sind. Dabei kann ganz allgemein wärmeisolierendes Material zur Vermeidung erhöhter Wärmeabstrahlung an all den Flächen vorgesehen werden, die nicht mit dem Filterkuchen in Berührung kommen.

Im folgenden wird die Erfindung an einem in der Zeichnung dargestellten Ausführungsbeispiel näher erläutert; es zeigen:
- Fig. 1: den Aufbau einer Filterpresse in schematischer Darstellung im Querschnitt,
- Fig. 2: einen Querschnitt durch einen Teil der Filterpresse nach Fig. 1 während der Filtrationsphase,
- Fig. 3: einen Querschnitt durch einen Teil der Filterpresse nach Fig. 1 während der Nachpress- und Trocknungsphase,
- Fig. 4: ein Membran-Filterelement in Draufsicht,
- Fig. 5: einen Schnitt längs der Linie V - V in Fig. 4
- Fig. 6: einen Schnitt längs der Linie VI - VI in Fig. 4
- Fig. 7: einen Schnitt längs der Linie VII - VII in Fig. 4
- Fig. 8: einen Schnitt längs der Linie VIII - VIII in Fig. 4
- Fig. 9: einen Querschnitt durch das Heizelement,

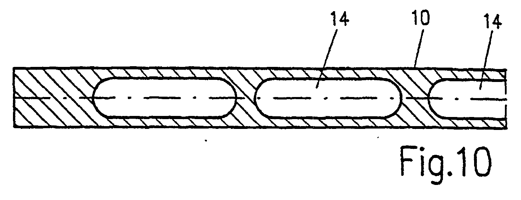

- Fig. 10: einen Schnitt längs der Linie X - X in Fig. 9
- Fig. 11: in den Teilfiguren a) bis e) verschiedene mögliche Ausführungsformen von Heizelementen im Querschnitt.

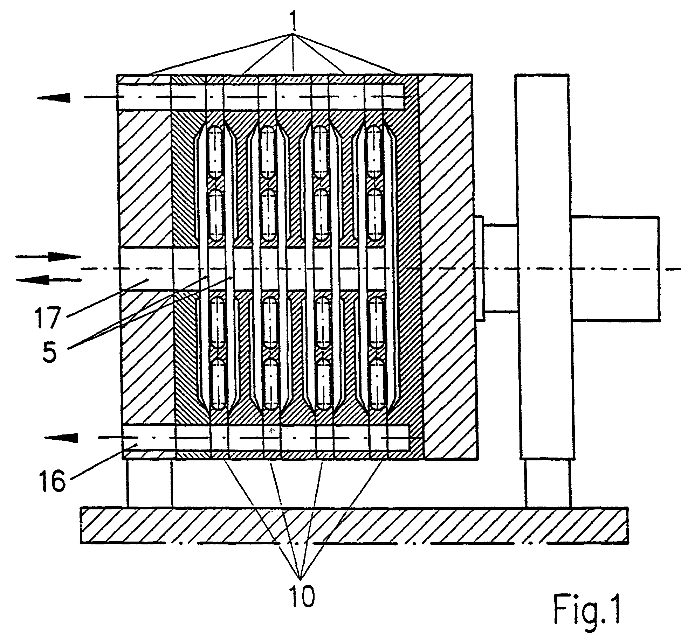

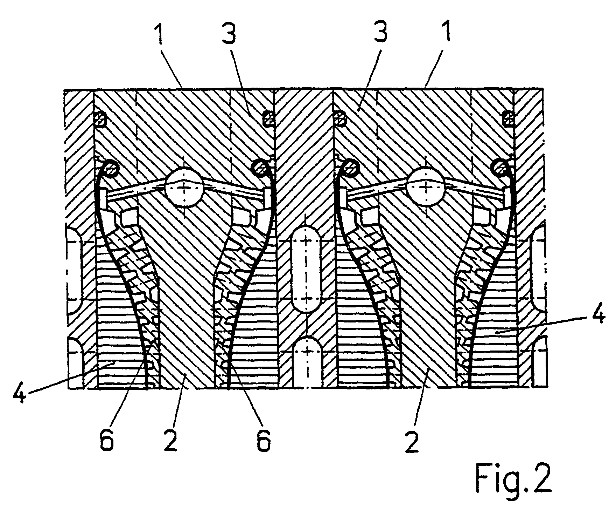

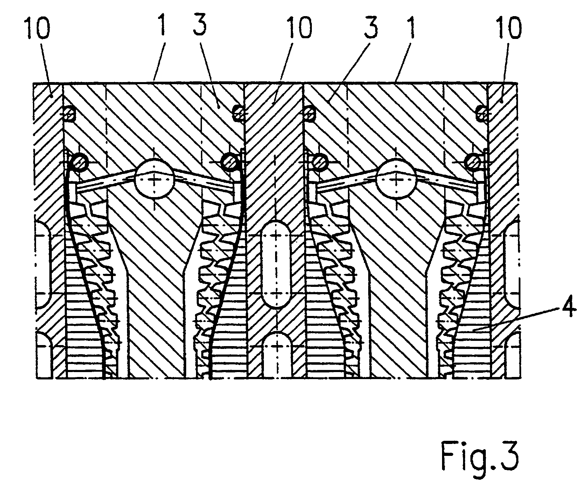

Die in der Zeichnung dargestellte Filterpresse besteht aus mehreren mit einer Stützwand 2 versehenen Membran-Filterelementen 1, die randseitig fließmitteldicht zusammengespannt sind. Dazu weisen sie einen an die Stützwand 2 anschließenden Plattenrahmen 3 auf. Die Membran-Filterelemente 1 bilden zwischen sich Filterkammern 4 mit darin mündenden Einläufen 5 für die zu filtrierende Suspension. Bei der in Fig. 1 dargestellten Ausführungsform trägt jedes Membran-Filterelement 1 beidseitig eine mit der Stützwand 2 bzw. dem Plattenrahmen 3 randseitig dicht verbundene, im übrigen durch ein Druckmedium in die Filterkammer 4 vorbewegbare Membran 6. Die Membran 6 weist auf ihrer der jeweiligen Filterkammer 4 zugekehrten Wandfläche mit einem Filtertuch 7 belegte Profilvorsprünge 8 auf, welche unter dem Filtertuch 7 ein an einen Filtratablauf 9 angeschlossenes Rinnensystem für das Filtrat bilden. In Fig. 2 ist ein Querschnitt durch einen Teil der Filterpresse nach Fig. 1 während der Filtrationsphase dargestellt, während Fig. 3 entsprechend die Nachpress- und Trocknungsphase wiedergibt.

Zwischen jeweils zwei Membran-Filterelementen 1 ist ein unmittelbar daran anschließendes Heizelement 10 angeordnet. Diese Heizelemente 10 bestehen zweckmäßigerweise aus einem Werkstoff hoher Wärmeleitfähigkeit, wobei sich hierfür insbesondere Metall anbietet. Da die Heizelemente 10 die Filterkammer 4 begrenzen, kommt an ihnen unmittelbar der Filterkuchen zur Anlage, so daß eine optimale Wärmeübertragung zum Filterkuchen hin gewährleistet ist.

Weiter kann über den Filtratablauf 16 bzw. den Trübezulauf 17 - in Fig. 1 durch Pfeile angedeutet - Vakuum angelegt werden, wodurch nicht nur das Absaugen der Feuchtigkeit beschleunigt, sondern auch die Siedetemperatur gesenkt wird.

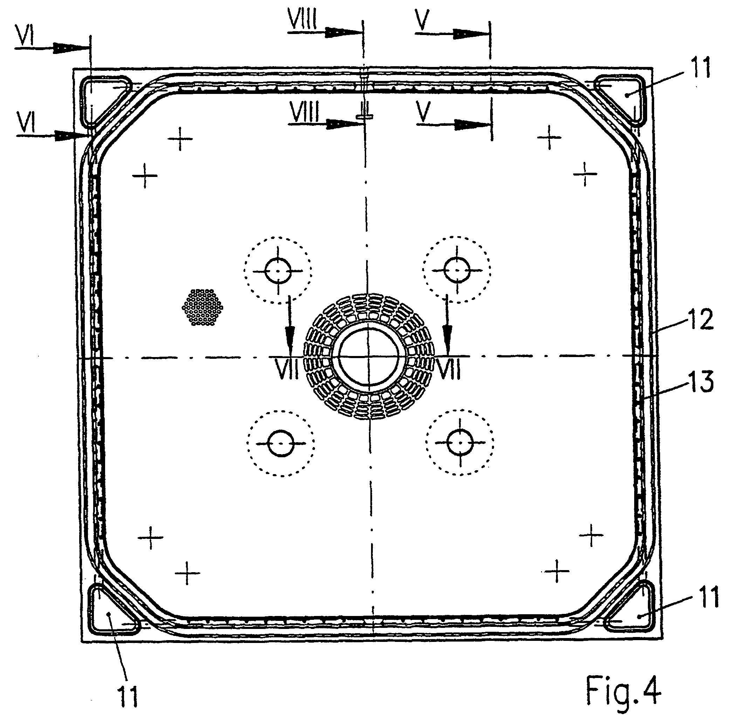

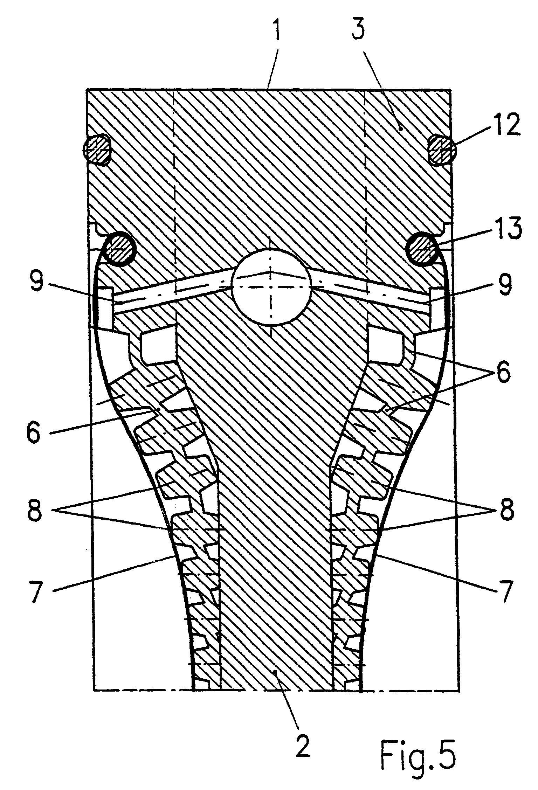

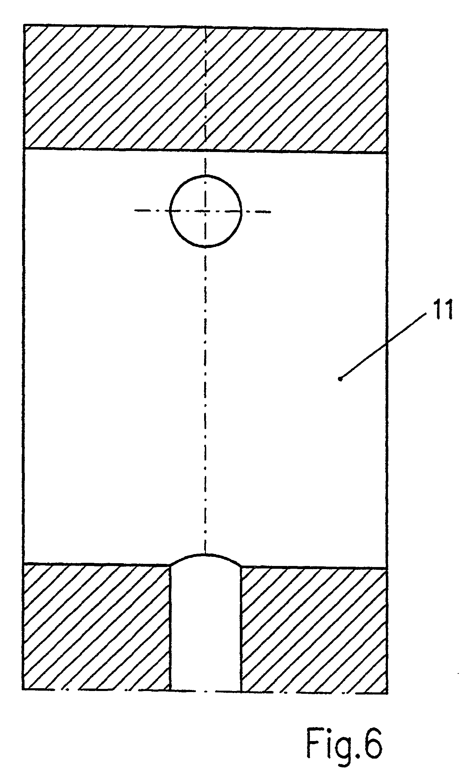

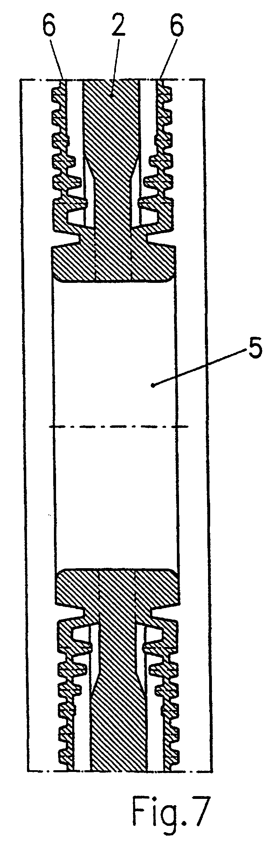

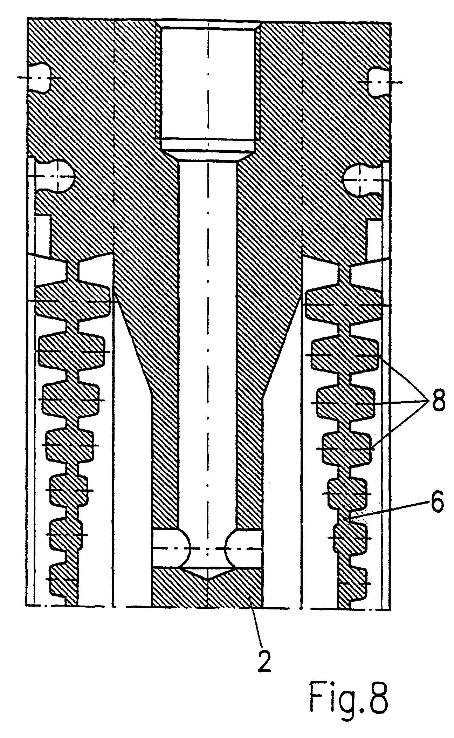

Um einen möglichst hohen Wirkungsgrad und eine gleichmäßige Verteilung des Vakuums zu erreichen, sind über den gesamten Umfang der Filterfläche gleichmäßig verteilt Filtratablaufbohrungen vorgesehen. Zusätzlich weisen - wie dies insbesondere aus Fig. 4 zu ersehen ist - die im Eckbereich der Membran-Filterelemente 1 angeordneten Filtratablaufkanäle 11 eine Dreiecksgestalt auf, wodurch der Ablaufquerschnitt erhöht ist und die Wirkung des Vakuums weiter begünstigt wird. Die einzelnen Schnittdarstellungen nach Fig. 4 sind in den Fig. 5 bis 8 wiedergegeben.

Um Druckverluste im Inneren der Filterpresse sicher auszuschließen, ist der Plattenrahmen 3 mit einer vakuumdichten Randabdichtung 12 versehen, wobei das Filtertuch 7 nicht darüber hinaus vorstehen darf, so daß innerhalb der Randabdichtung 12 eine integrierte Filtertuchklemmung 13 vorgesehen ist, wie dies im einzelnen aus Fig. 5 hervorgeht. Das Filtertuch 7 ist dabei in einer Tuchklemmnut mittels eines Klemmringprofils gehalten.

Die Heizelemente 10 sind auf ihrer den Membran-Filterelementen 1 zugewandten Seite der verfahrenstechnischen Anwendung entsprechend ausgebildet. Sie können dabei - wie in der Zeichnung dargestellt - eben oder aber auch mit einer Kuchenkammer versehen sein, wobei die Oberfläche vorzugweise ohne Drainageflächen gestaltet ist.

Um ein Anhaften des getrockneten Filterkuchens an dem Heizelement 10 zu verhindern, ist die Oberfläche der Heizelemente 10 wenigstens im Bereich der Filterkuchenflächen mit einer antiadhäsiven Beschichtung, vorzugweise mit PTFE versehen.

Die Heizelemente 10 können ein- oder mehrteilig ausgebildet sein, wobei sie bei mehrteiliger Ausbildung geklebt, verschweißt oder unter zusätzlicher Verwendung von Dichtungen verschraubt sein können.

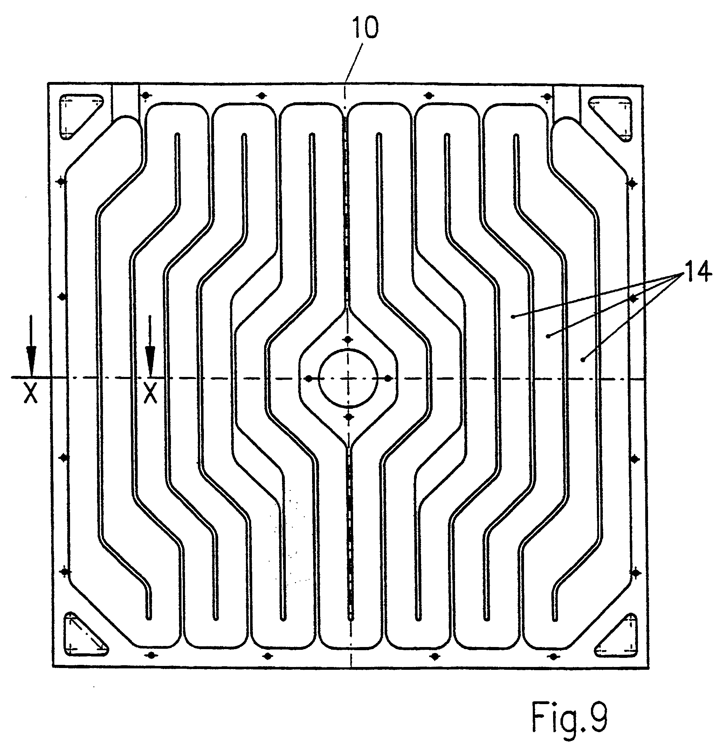

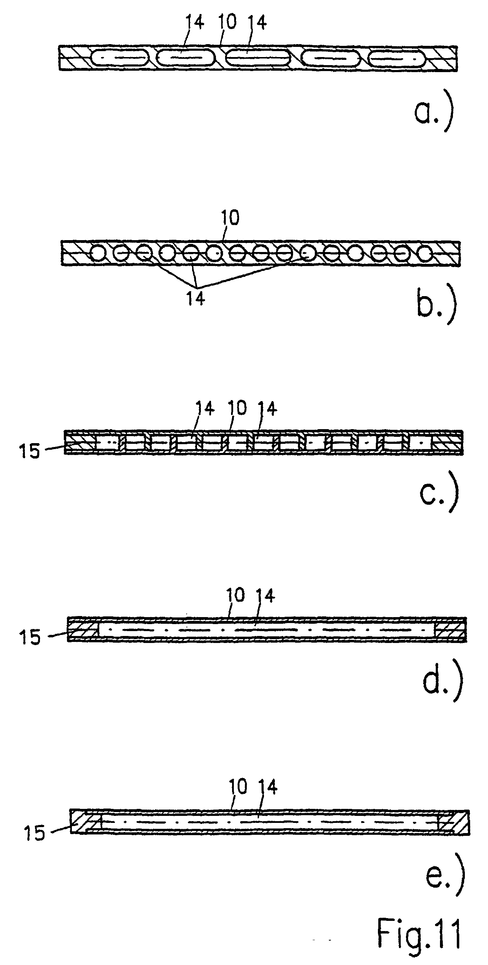

Wie sich insbesondere aus der Fig. 11 ergibt, können die Heizelemente 10 mit runden und/oder ovalen und/oder rechteckigen Heizkanälen 14 versehen sein. Für eine gleichmäßige Wärmeverteilung hat sich eine mäanderförmige Anordnung der Heizkanäle 14 - wie sie in Fig. 9 dargestellt ist - bewährt.

Schließlich besteht die Möglichkeit, die Heizelemente 10 im Randbereich wärmeisolierend auszubilden, wofür Ausführungsbeispiele in den Fig. 11 c) und e) zu sehen sind. Dort besteht der Rahmen 15 aus wärmeisolierendem Material.

Mit der vorstehend beschriebenen Filterpresse läßt sich ein Trocknungsverfahren für den in den Filterkammern 4 einer aus Membran-Filterelementen 1 aufgebauten Filterpresse im Verlauf eines Filtrationsprozesses aufgebauten Filterkuchen durchführen. Dazu werden die Filterkuchen zunächst im Anschluß an den Filtrationsprozeß oder einen nachgeschalteten Waschprozeß zur Entwässerung einer mechanischen Nachpreßphase unterworfen, wobei der Filterkuchen zur Trocknung erhitzt und zusätzlich die Filterkammer 4 evakuiert wird. Die Filterkuchen werden ausschließlich von der der Membran 6 abgewandten Seite her erhitzt, wobei die Temperatur so hoch eingestellt wird, daß unter Berücksichtigung des unter Einfluß des Vakuums erniedrigten Siedepunktes Dampffronten gebildet werden, die den Filterkuchen durchdringen und die Restflüssigkeit des Filterkuchens zur Drainagefläche der unbeheizten Membran 6 drücken. Die Beheizung erfolgt dabei über die Fläche des Filterkuchens so gleichmäßig, daß die Übergangszone vom Dampf zur Restflüssigkeit eben und homogen durch den Filterkuchen verläuft, ohne daß lokale Dampfdurchbrüche auftreten.

Zur schnelleren Drainage sowie zur Beschleunigung des Trocknungsprozesses kann das Vakuum bereits in der Nachpreßphase angelegt werden. Zweckmäßigerweise wird auch mit der Aufheizung des Filterkuchens bereits in der Nachpreßphase begonnen.

Um ein Zusammenfallen des Filterkuchens oder eine Rißbildung zu verhindern und somit einen den Wirkungsgrad wesentlich vermindernden örtlich begrenzten Dampfdurchschlag zu vermeiden, wird der Filterkuchen während der Trocknung unter dem Nachpreßdruck der Membran 6 gehalten, wobei der Nachpreßdruck größer eingestellt ist als der Dampfdruck der Filterkuchenflüssigkeit. Dadurch wird der Filterkuchen in der Filterkammer 4 stabilisiert bzw. der Volumenschwund durch die Trocknung ausgeglichen.

Weiter kann, was sich aus der Zeichnung nicht näher ergibt, das Membran-Druckmedium zur Einstellung erhöhter Temperaturdifferenzen oder zur Anpassung an verfahrenstechnische Erfordernisse in beschränktem Umfang kühlbar oder heizbar sein, wodurch die Prozeßführung in zusätzlichem Umfang anpaßbar ist.

Schließlich kann im Rahmen des Verfahrens das Vakuum entweder alternativ oder auch gleichzeitig am Filtratablauf 16 und am Trübezulauf 17 angelegt werden.

## Patentansprüche

1. Verfahren zur Trocknung der in den Filterkammern (4) einer aus Membran-Filterelementen (1) und Heizelementen (10) bestehenden Filterpresse im Verlauf eines Filtrationsprozesses aufgebauten Filterkuchen, die zunächst im Anschluß an den Filtrationsprozeß oder einen nachgeschalteten Waschprozeß zur Verringerung der Filterkuchenflüssigkeit einer mechanischen Nachpreßphase mittels einer Membran (6) unterworfen werden, wobei der Filterkuchen zur Trocknung erhitzt und zusätzlich die Filterkammer (4) evakuiert wird, **dadurch gekennzeichnet, daß** die Filterkuchen ausschließlich von der der Membran (6) abgewandten Seite her erhitzt werden, wobei die Temperatur unter Berücksichtigung des unter Einfluß des Vakuums erniedrigten Siedepunktes der Filterflüssigkeit so hoch eingestellt wird, daß eine Dampfschicht gebildet wird, die den Filterkuchen durchdringt und die Restflüssigkeit des Filterkuchens zur Drainagefläche der unbeheizten Membran (6) drückt, und wobei die Beheizung über die Fläche des Filterkuchens so gleichmäßig erfolgt, daß die Übergangszone der dampfförmigen zur flüssigen Phase eben und homogen durch den Filterkuchen verläuft, ohne daß lokale Dampfdurchbrüche auftreten.

2. Verfahren nach Anspruch 1, **dadurch gekennzeichnet, daß** das Vakuum bereits in der Nachpreßphase zur schnelleren Drainage angelegt wird.

3. Verfahren nach Anspruch 1 oder 2, **dadurch gekennzeichnet, daß** die Aufheizung des Filterkuchens bereits in der Nachpreßphase begonnen wird.

4. Verfahren nach einem der Ansprüche 1 bis 3, **dadurch gekennzeichnet, daß** der Filterkuchen unmittelbar der Oberfläche eines Heizelements (10) anliegt.

5. Verfahren nach einem der Ansprüche 1 bis 4, **dadurch gekennzeichnet, daß** der Filterkuchen während der Trocknung unter dem Nachpreßdruck der Membran (6) bleibt, wobei der Nachpreßdruck größer eingestellt ist als der Dampfdruck der Filterkuchenflüssigkeit.

6. Verfahren nach einem der Ansprüche 1 bis 5, **dadurch gekennzeichnet, daß** das Membran-Druckmedium zur Einstellung erhöhter Temperaturdifferenzen oder zur Anpassung an verfahrenstechnische Erfordernisse in beschränktem Umfang kühlbar oder heizbar ist.

7. Verfahren nach einem der Ansprüche 1 bis 6, **dadurch gekennzeichnet, daß** das Vakuum am Filtratablauf (16) und/oder am Trübezulauf (17) angelegt wird.

8. Filterpresse zur Durchführung des Verfahrens nach den Ansprüchen 1 bis 7, bestehend aus mehreren mit einer Stützwand (2) versehenen Membran-Filterelementen (1), die randseitig fließmitteldicht zusammengespannt sind und dazu einen an die Stützwand (2) anschließenden Plattenrahmen (3) aufweisen, wobei die Membran-Filterelemente (1) zwischen sich Filterkammern (4) mit darin mündenden Einläufen (5) für die zu filtrierende Suspension bilden und ein- oder beidseitig eine mit der Stützwand (2) oder dem Plattenrahmen (3) randseitig dicht verbundene, im übrigen durch ein Druckmedium in die Filterkammer (4) vorbewegbare Membran (6) tragen, die auf ihrer der jeweiligen Filterkammer (4) zugekehrten Wandfläche mit einem Filtertuch (7) belegte Profilvorsprünge (8) aufweist, welche unter dem Filtertuch (7) ein an einen Filtratablauf (9) angeschlossenes Rinnensystem für das Filtrat bilden, **dadurch gekennzeichnet, daß** zwischen jeweils zwei Membran-Filterelementen (1) ein unmittelbar anschließendes Heizelement (10) angeordnet ist, und daß über den gesamten Umfang der Filterfläche gleichmäßig verteilt Filtratablaufbohrungen vorgesehen sind.

9. Filterpresse nach Anspruch 8, **dadurch gekennzeichnet, daß** die im Eckbereich der Membran-Filterelemente (1) angeordneten Filtratablaufkanäle (11) eine flächenoptimierte Gestalt, vorzugsweise Dreiecksgestalt, aufweisen.

10. Filterpresse nach Anspruch 8 oder 9, **dadurch gekennzeichnet, daß** der Plattenrahmen (3) mit einer vakuumdichten Randabdichtung (12) versehen ist, wobei innerhalb der Randabdichtung (12) eine integrierte Filtertuchklemmung (13) vorgesehen ist.

11. Filterpresse nach einem der Ansprüche 8 bis 10, **dadurch gekennzeichnet, daß** die Heizelemente (10) aus einem Werkstoff hoher Wärmeleitfähigkeit und/oder hoher chemischer Resistenz bestehen.

12. Filterpresse nach einem der Ansprüche 8 bis 11, **dadurch gekennzeichnet, daß** die Heizelemente (10) auf ihrer den Membran-Filterelementen (1) zugewandten Seite der verfahrenstechnischen Anwendung entsprechend eben oder mit einer Kuchenkammer ausgebildet sind, wobei die Oberfläche vorzugweise ohne Drainageflächen gestaltet ist.

13. Filterpresse nach einem der Ansprüche 8 bis 12, **dadurch gekennzeichnet, daß** die Oberfläche der Heizelemente (10) wenigstens im Bereich der Filterkuchenflächen mit einer antiadhäsiven Beschichtung, vorzugweise mit PTFE versehen ist.

14. Filterpresse nach einem der Ansprüche 8 bis 13, **dadurch gekennzeichnet, daß** die Heizelemente (10) ein- oder mehrteilig ausgebildet sind.

15. Filterpresse nach Anspruch 14, **dadurch gekennzeichnet, daß** die Heizelemente (10) bei mehrteiliger Ausbildung geklebt, verschweißt oder unter zusätzlicher Verwendung von Dichtungen verschraubt sind.

16. Filterpresse nach einem der Ansprüche 8 bis 15, **dadurch gekennzeichnet, daß** die Heizelemente (10) mit runden und/oder ovalen und/oder rechteckigen Heizkanälen (14) versehen sind.

17. Filterpresse nach Anspruch 16, **dadurch gekennzeichnet, daß** die Heizkanäle (14) mäanderförmig angeordnet sind.

18. Filterpresse nach einem der Ansprüche 8 bis 17, **dadurch gekennzeichnet, daß** die Heizelemente (10) im Randbereich des Rahmens (15) wärmeisolierend ausgebildet sind.

19. Filterpresse nach einem der Ansprüche 8-18, **dadurch gekennzeichnet, daß** die Heizelemente (10) mit elektrischen Heizleitern ausgestattet sind.

## Claims

1. Method for drying the filter cakes which are built up in the filter chambers (4) of a filter press comprising membrane filter elements (1) and heating elements (10) in the course of a filtration process and which - following on from the filtration process or a downstream washing process - are first of all subjected to a mechanical re-pressing phase by means of a membrane (6) in order to reduce the fluid in the filter cake, wherein the filter cake is heated up for drying and additionally the filter chamber (4) is evacuated,
**characterised in that**
the filter cakes are heated up exclusively from that side facing away from the membrane (6), wherein taking into account the boiling point of the filter fluid that has been lowered under the influence of the vacuum, the temperature is set sufficiently high that a layer of steam is formed which penetrates through the filter cake and presses the residual fluid of the filter cake to the drainage surface of the unheated membrane (6), and wherein heating takes place over the surface of the filter cake in such an even manner that the transition zone from the vaporous to the liquid phase runs evenly and homogeneously through the filter cake, without local break-throughs of vapour occurring.

2. Method in accordance with claim 1, **characterised in that** the vacuum is applied as early as the re-pressing phase, for faster drainage.

3. Method in accordance with claim 1 or 2, **characterised in that** the heating up of the filter cake is started as early as the re-pressing phase.

4. Method in accordance with one of the claims 1 to 3, **characterised in that** the filter cake rests directly against the surface of a heating element (10).

5. Method in accordance with one of the claims 1 to 4, **characterised in that** during drying, the filter cake remains under the re-pressing pressure of the membrane (6), wherein the re-pressing pressure is set to be greater than the steam pressure of the filter cake fluid.

6. Method in accordance with one of the claims 1 to 5, **characterised in that** the membrane pressure medium can be cooled or heated to a limited extent in order to set increased temperature differences, or to adapt to process engineering requirements.

7. Method in accordance with one of the claims 1 to 6, **characterised in that** the vacuum is applied at the filtrate outlet (16) and/or at the sludge inlet (17).

8. Filter press for implementing the method according to claims 1 to 7, comprising several membrane filter elements (1) which are equipped with a support wall (2) and which are braced together at the edge so as to be tight to flowing media and for this purpose have a plate frame (3) that joins on to the support wall (2), wherein the membrane filter elements (1) form between themselves filter chambers (4) with inlets (5) opening into them for the suspension that is to be filtered, and on one or both sides bear a membrane (6) which is tightly connected at the edge to the support wall (2) or the plate frame (3) and furthermore can be moved forward into the filter chamber (4) by means of a pressure medium and which, on its wall surface facing the respective filter chamber (4), has profile projections (8) which are fitted with a filter cloth (7) and which under the filter cloth (7) form a channel system, connected to a filtrate outlet (9), for the filtrate,
**characterised in that**
arranged between two membrane filter elements (1) in each case is a directly connecting heating element (10), and that drilled holes for filtrate drainage are provided, evenly distributed over the entire extent of the filter surface.

9. Filter press in accordance with claim 8, **characterised in that** the filtrate drainage channels (11) arranged in the corner area of the membrane filter elements (1) have a surface-optimised form, preferably in the shape of a triangle.

10. Filter press in accordance with claim 8 or 9, **characterised in that** the plate frame (3) is equipped with a vacuum-tight edge seal (12), wherein an integrated filter cloth clamping arrangement (13) is provided within the edge seal (12).

11. Filter press in accordance with one of the claims 8 to 10, **characterised in that** the heating elements (10) comprise a material of high thermal conductivity and/or high chemical resistance.

12. Filter press in accordance with one of the claims 8 to 11, **characterised in that** depending on the process engineering application, on their side facing the membrane filter elements (1) the heating elements (10) are designed to be flat or to have a cake chamber, wherein the surface is preferably designed without drainage surfaces.

13. Filter press in accordance with one of the claims 8 to 12, **characterised in that** at least in the area of the filter cake surfaces, the surface of the heating elements (10) is provided with an anti-adhesive coating, preferably with PTFE.

14. Filter press in accordance with one of the claims 8 to 13, **characterised in that** the heating elements (10) are designed to be in one or more parts.

15. Filter press in accordance with claim 14, **characterised in that** where they are designed to be of more than one part, the heating elements (10) are glued, welded, or screwed together with the additional use of seals.

16. Filter press in accordance with one of the claims 8 to 15, **characterised in that** the heating elements (10) are equipped with round and/or oval and/or rectangular heating channels (14).

17. Filter press in accordance with claim 16, **characterised in that** the heating channels (14) are arranged in a meandering form.

18. Filter press in accordance with one of the claims 8 to 17, **characterised in that** in the edge area of the frame (15), the heating elements (10) are designed to be heat-insulating.

19. Filter press in accordance with one of the claims 8 to 18, **characterised in that** the heating elements (10) are equipped with electrical heat conductors.

## Revendications

1. Procédé de séchage des gâteaux de filtres formés au cours d'un processus de filtration dans les chambres de filtre (4) d'un filtre-presse comprenant des éléments membrane-filtre (1) et des éléments chauffants (10), lesquels gâteaux de filtres à la suite du processus de filtration ou d'un processus de rinçage consécutif, sont soumis à une phase de pressage mécanique au moyen d'une membrane (6) aux fins de réduire la fraction liquide du gâteau de filtre, le gâteau de filtre étant chauffé à des fins de séchage et un vide étant en outre appliqué à l'intérieur de la chambre de filtre, **caractérisé en ce que** les gâteaux de filtre sont chauffés exclusivement depuis le côté éloigné de la membrane (6), la température étant réglée en tenant compte de l'abaissement du point d'ébullition de la fraction liquide du gâteau dû à l'influence du vide à un niveau tel qu'il se forme une couche de vapeur qui pénètre le gâteau de filtre et chasse le liquide résiduel du gâteau de filtre vers la surface de drainage de la membrane (6) non chauffée, le chauffage présentant une uniformité sur la surface du gâteau de filtre, telle que la zone de transition entre la phase vapeur et la phase liquide s'étendent plane et homogène dans le gâteau de filtre, sans claquages de vapeur locaux.

2. Procédé selon la revendication 1, **caractérisé en ce que** le vide est appliqué dès la phase de pressage pour accélérer le drainage.

3. Procédé selon la revendication 1 ou 2, **caractérisé en ce que** le chauffage du gâteau de filtre commence pendant la phase de pressage.

4. Procédé selon une des revendications 1 à 3, **caractérisé en ce que** le gâteau de filtre est en contact direct avec la surface d'un élément chauffant (10).

5. Procédé selon une des revendications 1 à 4, **caractérisé en ce que** le gâteau de filtre pendant le séchage reste soumis à la pression de pressage de la membrane (6), la pression de pressage étant réglée à une valeur supérieure à la tension de vapeur du liquide du gâteau de filtre.

6. Procédé selon une des revendications 1 à 5, **caractérisé en ce que** le fluide de pression de membrane, afin d'obtenir de différences de température plus grandes ou pour respecter des exigences techniques de procédé peut être refroidi ou chauffé.

7. Procédé selon une des revendications 1 à 6, **caractérisé en ce que** le vide est appliqué au niveau de la sortie de filtrat (16) et/ou de l'entrée de liquide chargé (17).

8. Filtre-presse pour la mise en oeuvre du procédé selon les revendications 1 à 7, comprenant plusieurs éléments membrane-filtre (1) avec une paroi d'appui (2), qui sont assemblés de manière étanche aux fluides au niveau de leurs bords et présentent un cadre de plaque (3) lié à la paroi d'appui (2), les éléments membrane-filtre (1) définissant entre eux des chambres de filtre (4) avec des entrées (5) qui débouchent dans celles-ci pour la suspension à filtrer, et, d'un côté ou des deux côtés, une membrane (6) qui est liée de manière étanche au niveau de son bord à la paroi d'appui (2) ou au cadre de plaque (3) et peut être déplacée à l'intérieur de la chambre de filtre (4) à l'aide d'un fluide de pression, et qui, sur sa surface tournée vers la chambre de filtre (4) concernée, présente une toile de filtre (7) munie de saillies profilées (8) qui forment sous la toile de filtre (7) un système de rainures pour le filtrat en communication avec le la sortie de filtrat (9), **caractérisé en ce qu'**entre deux éléments membrane-filtre (1) est disposé un élément chauffant (10) et **en ce que** des trous de sortie de filtrat sont répartis de manière régulière sur la totalité du pourtour de la surface de filtre.

9. Filtre presse selon la revendication 8, **caractérisé en ce que** les canaux de sortie de filtrat (11) disposés dans la région des coins des éléments membrane-filtre (1) ont une forme optimisée sur le plan de la surface, de préférence une forme triangulaire.

10. Filtre presse selon la revendication 8 ou 9, **caractérisé en ce que** le cadre de plaque (3) est muni d'un moyen d'étanchéité périphérique (12) étanche au vide, un moyen intégré de blocage (13) de la toile de filtre étant prévu dans le moyen d'étanchéité périphérique (12).

11. Filtre presse selon une des revendications 8 à 10. **caractérisé en ce que** les éléments chauffants. (10) sont réalisés en un matériau qui présente une conductibilité thermique élevée et/ou une résistance élevée aux agents chimiques.

12. Filtre presse selon une des revendications 8 à 11, **caractérisé en ce que** les éléments chauffants (10) au niveau de leur face tournée vers les éléments membrane-filtre (1), selon l'application technique, sont plans ou présentent une chambre à gâteau, la surface étant de préférence exempte de surfaces de drainage.

13. Filtre presse selon une des revendications 8 à 12, **caractérisé en ce que** la surface des éléments chauffants (10), au moins dans la région des surfaces à gâteau de filtre sont pourvues d'un revêtement anti-adhésif, de préférence en PTFE.

14. Filtre presse selon une des revendications 8 à 13, **caractérisé en ce que** les éléments chauffants (10) sont réalisés en une ou en plusieurs parties.

15. Filtre presse selon la revendication 14, **caractérisé en ce que** les éléments chauffants (10), lorsqu'ils sont réalisés en plusieurs parties, sont collés, soudés ou assemblés par vis en utilisant des joints supplémentaires.

16. Filtre presse selon une des revendications 8 à 15, **caractérisé en ce que** les éléments chauffants (10) sont pourvus de canaux de chauffage (14) ronds et/ou ovales et/ou rectangulaires.

17. Filtre presse selon la revendication 16, **caractérisé en ce que** les canaux de chauffage (14) sont disposés en méandres.

18. Filtre presse selon une des revendications 8 à 17, **caractérisé en ce que** les éléments chauffants (10) dans la région du bord du cadre (15) sont thermiquement isolants.

19. Filtre presse selon une des revendications 8 à 18, **caractérisé en ce que** les éléments chauffants (10) sont équipés de résistances de chauffage électriques.
